# EUROPÄISCHE PATENTANMELDUNG

(11) **EP 0 933 260 A2**
(43) Veröffentlichungstag der Anmeldung: **04.08.1999**
(21) Anmeldenummer: 99101899.5
(22) Anmeldetag: 29.01.1999
(51) Int. Cl.: B60R 15/00

(54) **Tank für die Aufnahme von Flüssigkeit**

(30) Priorität: 30.01.1998 DE 19803512
(71) Anmelder: Fusion Kunststoff GmbH, 63303 Dreieich (DE)
(72) Erfinder: Heijink Peter K., 3822 DW Amersfoort (NL); Bönschen, Michael, 63110 Rodgau-Dudenhofen (DE)
(74) Vertreter: Schickedanz, Willi, Dipl.-Ing.

(57) **Zusammenfassung**

Die Erfindung betrifft einen Tank für die Aufnahme von Flüssigkeit, insbesondere einen Wassertank (40) für Wohnmobile und dergleichen. Durch den Austausch von Anschlußteilen ist es möglich, den Tank sowohl als Frischwassertank als auch als Abwassertank zu verwenden. Die Anschlußteile weisen lösbare Steck- oder Schnappverbindungen auf, so daß die Frischwasser- oder Abwasserzuläufe bzw. -abläufe auf einfache Weise angeklickt werden können. Die notwendigen elektrischen Verbindungen (47), die z. B. für den Betrieb von Pumpen erforderlich sind, werden hierbei gleichzeitig mit hergestellt.

## Beschreibung

Die Erfindung betrifft einen Tank für die Aufnahme von Flüssigkeit nach dem Oberbegriff des Patentanspruchs 1.

Frisch- und Abwassertanks werden auf zahlreichen Gebieten eingesetzt. Besonders häufig kommen solche Tanks bei Caravans oder Wohnwagen zum Einsatz. Sie bestehen heutzutage in der Regel aus lebensmittelechtem, recycelbarem Polyethylen und werden im Rotationssinterverfahren hergestellt.

Nachteilig ist bei den meisten Abwasser- und Frischwassertanks, daß sie keine Füllstandsanzeige aufweisen, so daß der Besitzer dieser Tanks nie genau weiß, wieviel Flüssigkeit sie noch enthalten.

Es ist indessen bereits ein Abwasserbehälter für Campingwagen bekannt, dessen Füllstand vom Inneren des Campingwagens aus kontrolliert werden kann und der außerdem nicht überläuft (DE-OS 26 50 315). Dieser Abwasserbehälter besitzt einen Anschlußstutzen für den luftdichten Anschluß einer Abwasserleitung des Campingwagens und ein Entlüftungsrohr mit einer Entlüftungsöffnung. Hierbei ragt die Entlüftungsöffnung des Entlüftungsrohrs mit einem Abstand zur Oberkante des Abwasserbehälters in den Abwasserbehälter hinein.

Weiterhin ist ein Wasserbehälter für Frischwasser in Wohnwagen bekannt, der mit einer verschließbaren Öffnung zur Durchführung eines Steigrohres versehen ist (DE-GM 84 16 257.0). Dieser Wasserbehälter weist eine weitere Durchführung für eine Schmutzwasserleitung auf, wobei das Ende der Schmutzwasserleitung mit einer flexiblen Blase flüssigkeitsdicht verbunden ist.

Bei einem anderen bekannten Abwassertank ist ein Einfüllstutzen vorgesehen, der mit einem Schieber verschlossen werden kann (DE-GM 89 12 117). Bei diesem Schieberverschluß handelt es sich jedoch nicht um eine Steckverbindung.

Ferner ist ein Abwassertank bekannt, der zwei Koppelelemente aufweist, von denen das eine Koppelelement mit einem Koppelelement eines Trägers verbunden werden kann, während das andere Koppelelement mit einem Auslaßanpasser in Verbindung steht (GB 2 310 244). Eine Steckverbindung zwischen dem Tank und einem Flüssigkeitsschlauch ist hierbei nicht vorgesehen.

Es ist außerdem ein Abwasserbehälter für das Abwasser von Campingwagen etc. bekannt, der einen Anschlußstutzen für den luftdichten Anschluß einer Abwasserleitung eines Campingwagens und ein Entlüftungsrohr mit einer Entlüftungsöffnung besitzt (DE 26 50 315). Zwischen einem Schlauch und diesem Abwasserbehälter ist jedoch keine Steckverbindung vorgesehen.

Es ist indessen auch ein flexibler Schlauch bekannt, der an seinen beiden Enden mit einem Koppelelement versehen ist (GB 2 271 127). Hierbei wird ein Koppelelement in einen Abwasserleitungsflansch eingeführt, wobei ein O-Ring eine feste Abdichtung herstellt. Das Koppelelement am anderen Ende des Schlauchs wird in eine tragbare Toilettenkupplung eingesteckt, die in den Hals der tragbaren Toilette eingeschraubt ist.

Schlauchverschraubungen und Bauelemente für drucklose Systeme sind ebenfalls bekannt (DE 34 00 290 C2, DE 34 48 441, DE 42 30 182). Sie zeigen jedoch keine Lösungen für das Problem, Wasserschläuche an Wasserbehältern auf einfache Weise anzukoppeln.

Aus dem deutschen Gebrauchsmuster 296 06 472 ist ein Steckkupplungssystem bekannt, das mit einer Pumpe in Verbindung steht.

Schließlich ist auch noch ein Flüssigkeitstank mit Füllstandsanzeige bekannt, der wenigstens einen Verschluß enthält (DE 44 45 474 A1). Bei diesem Verschluß handelt es sich um einen am Tank anbringbaren Deckel, der mit wenigstens einem Füllstands-Meßstab versehen ist. Obgleich dieser bekannte Flüssigkeitstank im Prinzip sowohl als Frischwasser- als auch als Abwassertank verwendbar ist, ist es doch relativ aufwendig, einen Frischwassertank in einen Abwassertank zu verwandeln und umgekehrt. In der Praxis werden deshalb Frischwasser- und Abwassertanks eingesetzt, die sich voneinander unterscheiden.

Der Erfindung liegt die Aufgabe zugrunde, einen Flüssigkeitstank zu schaffen, der auf einfache Weise von einem Abwassertank in einen Frischwassertank und umgekehrt verwandelt werden kann.

Diese Aufgabe wird gemäß den Merkmalen des Patentanspruchs 1 gelöst.

Der mit der Erfindung erzielte Vorteil besteht insbesondere darin, daß durch einfache Verbindungselemente, die an einer Tanköffnung vorgesehen sind, der Tank zu einem Frischwasser- oder Abwassertank umfunktioniert werden kann.

Ein weiterer Vorteil besteht darin, daß zwei Bauelemente, von denen das eine die Funktion einer Steckdose und das andere die Funktion eines Steckers hat, unabhängig von dem jeweiligen konkreten Tank hergestellt werden können. Bei diesen Bauelementen sind nicht nur die für den Wasserzufluß oder -abfluß wesentlichen Teile vorgesehen, sondern auch die für eine Stromzufuhr wichtigen Teile.

Es ist somit eine lösbare Verbindung zum Anschluß an Elektro- und Wasserleitungen möglich, da die Steckdose bzw. der Stecker alle Leitungen für Strom und Wasser sowie für die Be- und Entlüftung aufweisen. Mit einem einzigen "Klick" können somit alle an einem Tank notwendigen Anschlüsse hergestellt bzw. wieder getrennt werden.

Anhand der nachfolgend beschriebenen Zeichnungen wird die Erfindung näher erläutert. Es zeigen:
- Fig. 1: einen herkömmlichen Frischwasser-Mobiltank;
- Fig. 2a: den Einschub eines Frischwasser-Mobiltanks in einer Ausnehmung eines Wohnmobils;
- Fig. 2b: einen aus einem Wohnmobil herausgenommenen Frischwassertank;
- Fig. 2c: einen Frischwassertank, der auf Rädern weggerollt wird;
- Fig. 3a: einen in einer Wohnmobil-Nische untergebrachten Abwassertank;
- Fig. 3b: eine herkömmliche Verwendung eines Abwassertanks;
- Fig. 3c: den Abtransport eines gefüllten Abwassertanks;
- Fig. 4: einen erfindungsgemäßen Universal-Flüssigkeitstank, der sowohl als Abwasser- als auch als Frischwassertank dienen kann;
- Fig. 5: einen Universaltank in seiner Funktion als Abwassertank;
- Fig. 6: einen Universaltank in seiner Funktion als Frischwassertank;
- Fig. 7: einen ersten Teil für eine Schnappverbindung zum Verbinden von zwei Flüssigkeitsleitungen;
- Fig. 8: einen Längsschnitt durch das erste Teil einer Schnappverbindung;
- Fig. 9: einen zweiten Teil für eine Schnappverbindung zum Verbinden von zwei Flüssigkeitsleitungen;
- Fig. 10: einen Längsschnitt durch den zweiten Teil einer Schnappverbindung;
- Fig. 11: den ersten und den zweiten Teil einer Schnappverbindung zum Verbinden von zwei Flüssigkeitsleitungen im zusammengesteckten Zustand;
- Fig. 12: einen Längsschnitt durch die zusammengefügten ersten und zweiten Teile;
- Fig. 13: ein erstes Koppelelement für den Anschluß eines Schlauchs;
- Fig. 14: ein zweites Koppelelement für die Verbindung mit einem Tank;
- Fig. 15: eine vergrößerte Darstellung des in der Fig. 6 gezeigten Bauteils;
- Fig. 16: eine Ansicht von oben auf das Bauteil gemäß Fig. 15;
- Fig. 17: eine perspektivische Ansicht des in der Fig. 16 dargestellten Bauelements;
- Fig. 18: einen Aufstecker mit einem Schlauch;
- Fig. 19: den Aufstecker der Fig. 18 in einer perspektivischen Ansicht;
- Fig. 20: eine perspektivische Ansicht der Unterseite des in den Fig. 18 und 19 dargestellten Aufsteckers;
- Fig. 21: die untere Schalenhälfte des Aufsteckers der Fig. 18 in einer Ansicht von unten;
- Fig. 22: die untere Schalenhälfte des Aufsteckers der Fig. 18 in einer Ansicht von oben;
- Fig. 23: die obere Schalenhälfte des Aufsteckers gemäß Fig. 18;
- Fig. 24: einen Einsatz für den Aufstecker nach Fig. 18.

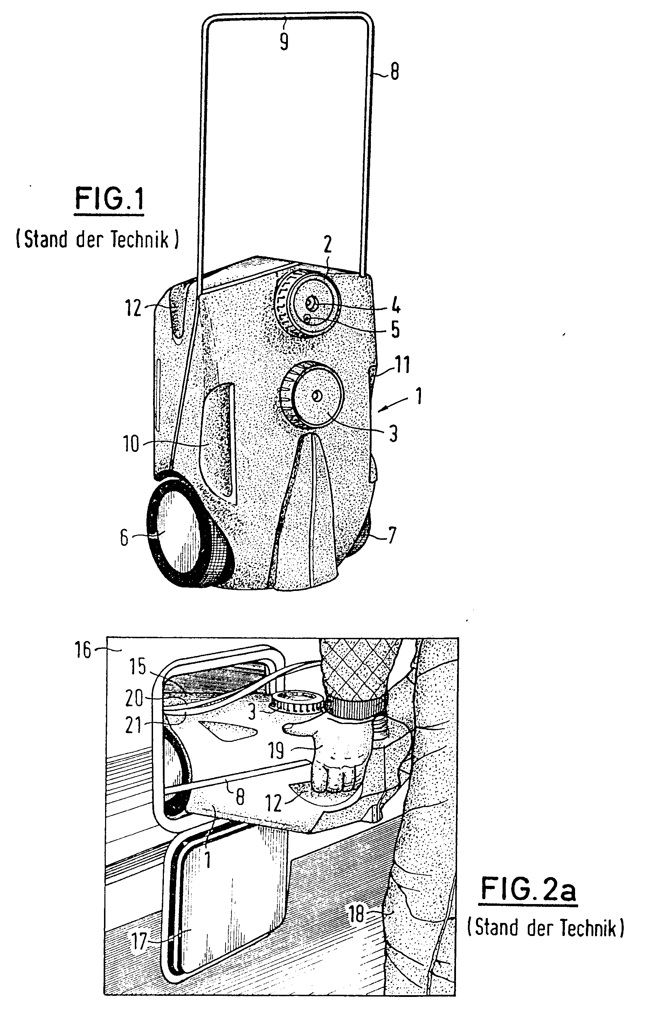

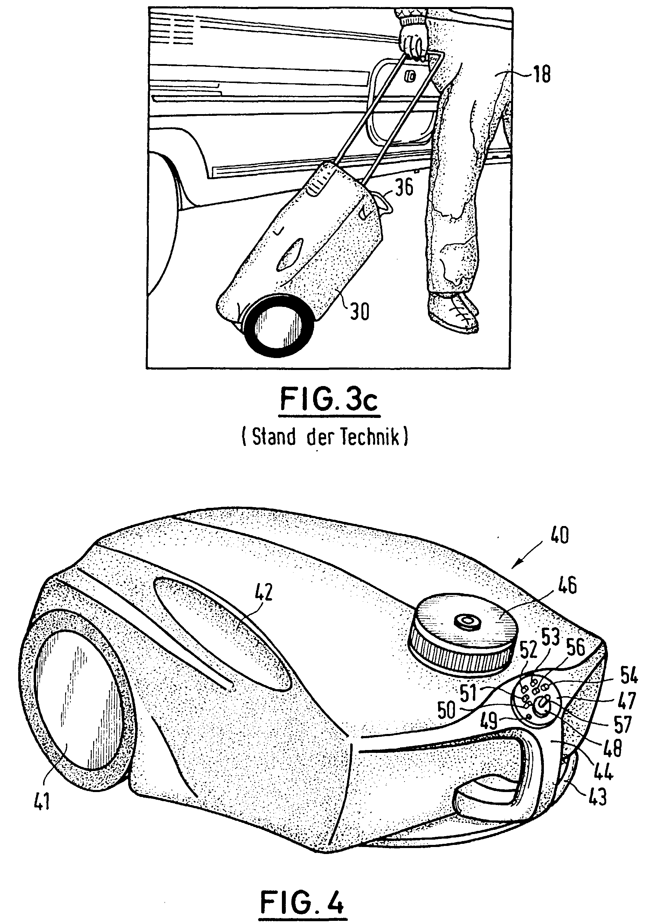

In der Fig. 1 ist ein herkömmlicher Frischwassertank 1 dargestellt, der im wesentlichen dem in Fig. 4 der DE 44 45 474 dargestellten Tank entspricht. Dieser Frischwassertank weist einen ersten Verschlußdeckel 2 und einen zweiten Verschlußdeckel 3 auf, wobei der zweite Verschlußdeckel 3 mit einem Vorsprung auf der Oberseite des Frischwassertanks 1 verschraubt ist. Der Verschlußdeckel 2 ist ebenfalls mit einem Vorsprung auf der Oberseite des Frischwassertanks 1 verschraubt und weist im Gegensatz zum Verschlußdeckel 3 zwei Öffnungen 4, 5 auf, von denen die eine Öffnung 4 als Durchlaß für einen Wasserschlauch dient, während die andere Öffnung 5 eine Durchführung für ein elektrisches Kabel ist, über welches eine im Frischwassertank 1 befindliche Pumpe mit elektrischer Energie versorgt wird.

Der Frischwassertank ist leicht transportierbar, denn er besitzt zwei Räder 6, 7 und einen Handbügel 8. Der Handbügel 8 ist derart umklappbar, daß sein oberer Quersteg 9 im umgeklappten Zustand in der Höhe der Räder 6, 7 zu liegen kommt. Mit 10, 11, 12 sind Mulden bezeichnet, in die mit den Händen eingegriffen werden kann, damit der Tank 1 leichter zu heben oder zu tragen ist.

Die Fig. 2a zeigt, wie der Frischwassertank 1 aus einer Nische 15 eines Wohnmobils 16, die zuvor von einer Klappe 17 verschlossen war, 16 herausgenommen wird. Der Handbügel 8 ist dabei umgeklappt. Die Bedienungsperson 18 greift mit ihrer Hand 19 in die Mulde 12 ein und hält damit den Frischwassertank 1. Über dem Verschlußdeckel 3 erkennt man einen Wasserschlauch 20 und ein Elektrokabel 21, die mit einer nicht dargestellten Pumpe verbunden sind.

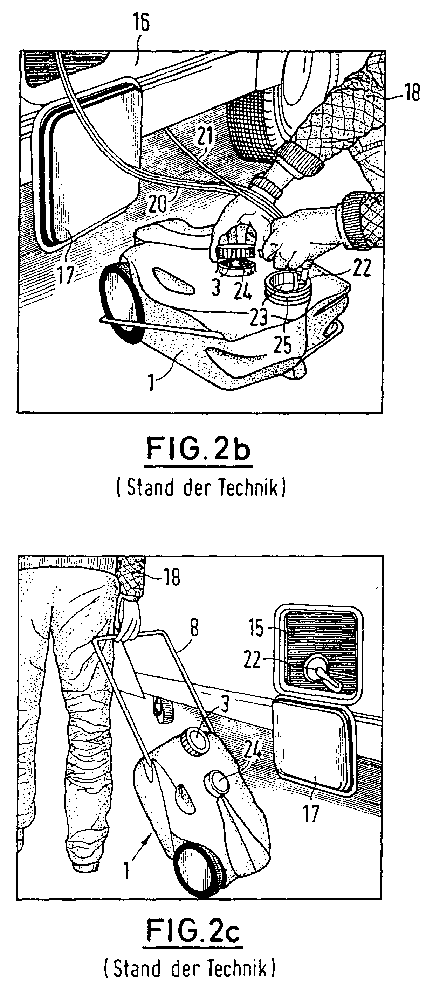

Die Fig. 2b zeigt den Frischwassertank 1 auf dem Boden vor dem Wohnmobil 16 liegend. Die Bedienungsperson 18 nimmt hierbei gerade einen Einsatz 22 aus der Öffnung 23 des Tanks. Dieser Einsatz 22 enthält u. a. eine Wasserpumpe, die in Fig. 2b nicht sichtbar ist, weil sie sich noch im Frischwassertank 1 befindet. Der auf dem Vorsprung 24 befindliche Deckel 3 wird abgenommen und anschließend auf den Vorsprung 25 geschraubt, sobald der Einsatz 22 entfernt ist.

Dieser Einsatz 22 wird, wie die Fig. 2c zeigt, in die Nische 15 des Wohnmobils zurückgelegt. Die nunmehr mit dem Deckel 3 verschraubte Öffnung 23 gestattet es, daß der Frischwassertank 1 nun von der Bedienungsperson 18 weggerollt werden kann. Mit 24 ist der Vorsprung bezeichnet, auf dem sich der Deckel 3 zuvor befand.

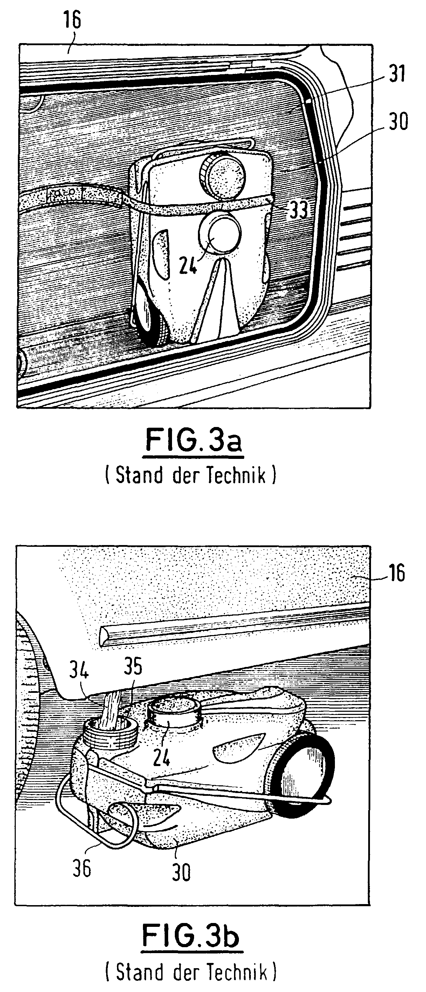

In der Fig. 3a ist ein Abwassertank 30 in einer Nische 31 des Wohnmobils 16 dargestellt. Dieser Abwassertank 30 wird durch einen Gurt 33 gehalten.

Um Abwasser 34 aufzunehmen, wird der Abwassertank 30 unter das Wohnmobil 16 gelegt, wie die Fig. 3b zeigt. Nachdem ein nicht dargestellter Verschluß am Boden des Wohnmobils geöffnet wurde, kann das Abwasser 34 durch eine Öffnung 35 des Abwassertanks 30 in diesen gelangen. Der Abwassertank 30 hat im Gegensatz zum Frischwassertank 1 noch einen zusätzlichen Griff 36.

Die Fig. 3c zeigt den Zustand, daß der gefüllte Abwassertank 30 von der Bedienungsperson 18 weggerollt wird.

In der Fig. 4 ist ein erfindungsgemäßer Universaltank 40 dargestellt, der eine ähnliche Form besitzt wie die zuvor beschriebenen Frischwasser- bzw. Abwassertanks.

Er weist zwei Räder auf, von denen in der Fig. 4 nur das eine Rad 41 zu sehen ist. Er besitzt ferner seitliche Mulden, um ihn besser hochheben zu können. Von diesen Mulden ist nur die eine Mulde 42 in der Fig. 4 erkennbar. Auf der Unterseite des Universaltanks 40 erkennt man einen Bügel 43, der funktionsmäßig dem bekannten Handgriff 8 entspricht. Über dem sichtbaren Ende des Bügels 43 ist ein Griff 44 vorgesehen, der zum manuellen Transport des Universaltanks 40 dient. Auf der Oberseite dieses Tanks 40 erkennt man einen Deckel 46 und einen Anschluß 47. Dieser Anschluß 47 ist vom Tank 40 abnehmbar und mit einer Öffnung 48 und mehreren Paßöffnungen 49 bis 57 versehen. Diese Öffnungen 49 bis 57 dienen dazu, daß ein Aufstecker nur auf eine vorgegebene Weise aufgesteckt werden kann. Der in der Fig. 4 nicht dargestellte Aufstecker weist ebensoviele Stifte auf, wie der Anschluß 47 Paßöffnungen besitzt. Diese Stifte können dabei die Funktion elektrischer Verbindungselemente übernehmen.

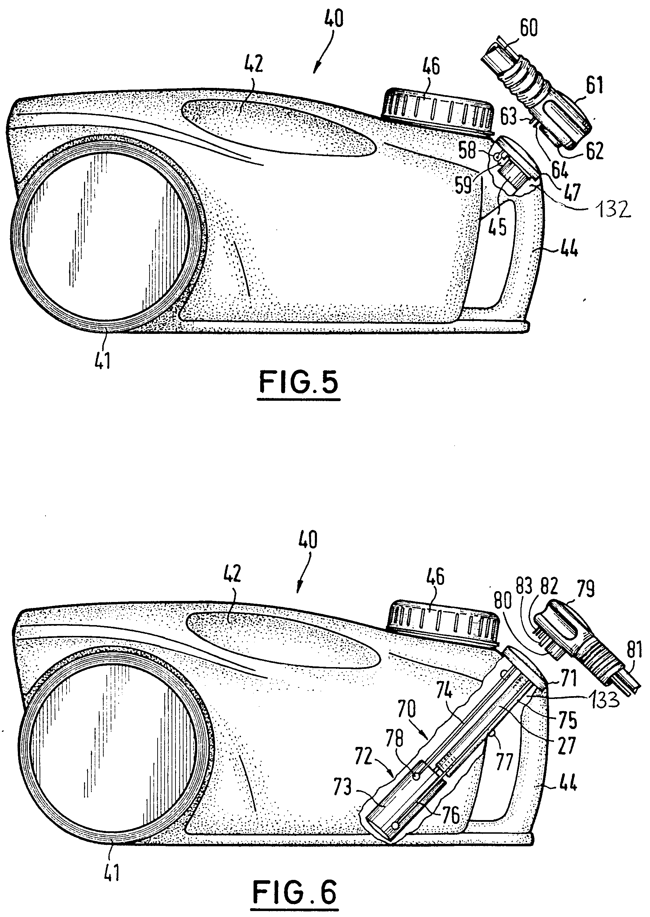

In der Fig. 5 ist der Universaltank 40 in einer Seitenansicht gezeigt, wobei er die Funktion eines Abwassertanks erfüllt. Man erkennt hierbei den vorderen Anschluß 47, der als Abwasseranschluß ausgebildet ist und deshalb nur zwei kurze Füllstandssensoren 58, 59 aufweist, mit denen festgestellt werden kann, ob der Tank gefüllt ist. Die Verbindung eines Abwasserschlauchs 60 mit dem Anschluß 47 erfolgt mittels eines Aufsteckers 61, der mit dem Anschluß 67 bajonettartig bzw. nach Art eines Schnappverschlusses verbunden werden kann. Der Abwasserschlauch 60 sowie ein rohrförmiger Stutzen 62 des Aufsteckers 61 weisen einen relativ großen Durchmesser auf. Der rohrförmige Stutzen 62 dient hierbei als Durchlaß für Flüssigkeiten. Damit der Aufstecker 61 nur in einer bestimmten Lage mit dem Anschluß 47 verbunden werden kann, weist der Aufstecker 61 Stifte 63, 64 auf, die in entsprechende Löcher des Anschlusses 47 passen.

Die Fig. 6 zeigt den gleichen Universaltank 40 wie die Fig. 5, jedoch in einer Verwendung als Frischwassertank. Hierbei ist ein Bauteil 70 in den Tank 40 eingeschoben, das einen oberen Anschluß 71 und einen unteren Pumpenbereich 72 aufweist. Der Pumpenbereich 72 enthält eine Motorpumpe 73, die mit dem Anschluß 71 über einen Verbindungsschlauch 27 verbunden ist. Außerdem ist der Anschluß 71 mit mehreren Sensorstangen 74 bis 78 versehen. Mit diesen Sensorstangen können verschiedene Füllstände erfasst werden.

Mit 79 ist ein Aufstecker bezeichnet, der einen Stutzen 80 mit relativ kleinem Durchmesser aufweist. Mehrere Stifte 82, 83 stellen sicher, daß der Aufstecker 79 nur in einer ganz bestimmten Weise mit dem Anschluß 71 verbunden werden kann. Mit 81 ist ein Frischwasserschlauch bezeichnet. Parallel zu diesem Frischwasserschlauch 81 verlaufen mehrere elektrische Leitungen.

Die Verbindung zwischen den Aufsteckern 61, 79 und den zugehörigen Anschlüssen 47, 71 wird vorzugsweise mittels Steck- bzw. Schnappverschlüssen hergestellt. Es wird also der Aufstecker 61 mit dem Anschluß 47 durch bloßes Aufstecken verbunden, um den Abwassertank mit Wasser füllen zu können, das beispielsweise aus einem Wohnwagen kommt. Das Wasser des Frischwassertanks kann dadurch entnommen werden, daß der Aufstecker 79 mit dem Anschluß 71 durch bloßes Einstecken verbunden wird. Die Anschlüsse 47, 71 sind aus dem Tank 40 herausnehmbar, der hierfür eine Öffnung 132 bzw. 133 aufweist. Die Stutzen 62 und 80 sind bei Abwasser- und Frischwassertanks verschieden groß ausgebildet, um Abwasser- und Frischwasserbauteile nicht zu verwechseln. Dies muß jedoch nicht so sein, wie anhand weiterer Ausführungsbeispiele noch gezeigt wird.

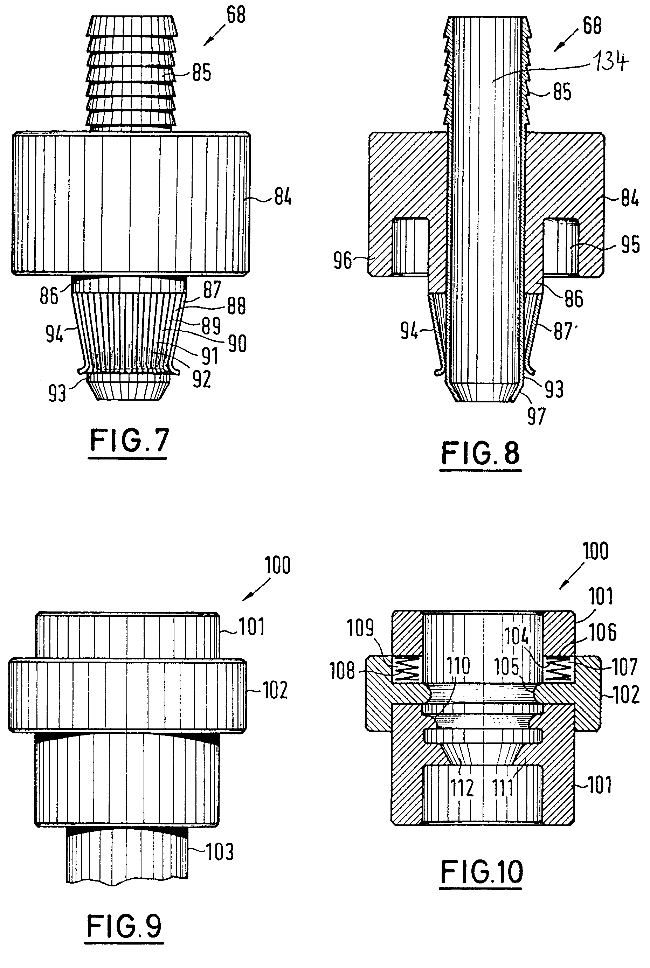

Eine besondere Art der Steckverbindung, die etwa den Steckverbindungen gleicht, die bei Gartenschlauchsystemen zur Anwendung kommen, wird in den nachfolgenden Fig. 7 bis 12 beschrieben.

Bei dieser besonderen Steckverbindung sind die elektrischen Koppelelemente nicht dargestellt, um die mechanische Verbindung zu verdeutlichen.

In der Fig. 7 ist ein erster Teil 68 für die Herstellung einer Steck- oder Schnappverbindung dargestellt. Mit 84 ist ein Ring bezeichnet, aus dem oben ein Flüssigkeitsrohr 85 herausragt. Auf der unteren Seite des Rings 84 ragt ein Stutzen 86 heraus, an dem lamellenartige Elemente 87 bis 92, 94 angeordnet sind. Diese lamellenartigen Elemente 87 bis 92 umschließen ein Flüssigkeitsrohr 93, das eine Verlängerung des Flüssigkeitsrohrs 85 nach unten darstellt. Mit dem Flüssigkeitsrohr 85 kann ein nicht dargestellter Schlauch verbunden werden, ähnlich dem Schlauch 60 bzw. 81 in den Fig. 5 bzw. 6.

Die Fig. 8 zeigt den gleichen Teil 68 wie die Fig. 7, jedoch in einem Längsschnitt. Man erkennt hierbei, daß der Ring 84 eine Ausnehmung 95 aufweist, die sich zwischen einem Randbereich 96 des Rings 84 und dem Stutzen 86 befindet.

Von den lamellenartigen Elementen 87 bis 92, 94 sind in der Fig. 8 nur die beiden äußeren Elemente 87, 94 zu erkennen.

Wie man ferner aus der Fig. 8 ersieht, stellen die Flüssigkeitsrohre 85, 93 ein einheitliches Rohr dar, das an seinem unteren Ende 97 konisch zuläuft. Dieses konisch zulaufende Ende kann elastisch ausgebildet oder mit einem elastischen Dichtring (nicht dargestellt) umgeben sein. Außerdem kann es elektrische Kontakte enthalten, die mit Leiterbahnen um oder auf dem Rohr 85, 93 in Verbindung stehen.

Die Fig. 9 zeigt ein zweites Teil 100 für die Herstellung einer Steck- oder Schnappverbindung. Dieses Teil, welches in eine Öffnung eines Tanks eingegeben werden kann, besteht aus einem Zylinder 101 und einem diesen Zylinder 101 umgebenden Ring 102. Auf der Unterseite des Zylinders 101 ragt ein Anschlußstutzen 103 heraus. Dieser Anschlußstutzen kann mit einer Pumpe in Verbindung stehen, ähnlich dem Anschluß 71 in Fig. 6.

In der Fig. 10 ist der zweite Teil 100 noch einmal im Längsschnitt dargestellt. Man erkennt hierbei, daß im Zylinder 101 eine ringförmige Ausnehmung 104 vorgesehen ist, in die ein ringförmiger Vorsprung 105 des Rings 102 hineinragt. Zwischen diesem ringförmigen Vorsprung 105 und der Oberkante 106 der Ausnehmung 104 ist eine Spiralfeder 107 angeordnet, die auf den Vorsprung 105 drückt. Eine weitere Spiralfeder 108 ist auf der anderen Seite der Ausnehmung 104 vorgesehen, die mit 109 bezeichnet ist. Statt zweier Spiralfedern 107, 108 oder mehreren in einem Kreis angeordneter Spiralfedern kann man auch ein einheitliches federelastisches Element vorsehen, beispielsweise einen stark federelastischen Gummiring. Unterhalb des Vorsprungs 105 befindet sich eine umlaufende Rastnase 110, an die ein ringförmiger Vorsprung 111 mit einer konischen Öffnung 112 nach unten hin anschließt. Der Anschlußstutzen 103 gemäß Fig. 9 ist in der Fig. 10 weggelassen. Er kann beispielsweise durch Verschrauben mit der Ausnehmung im unteren Bereich des Zylinders 101 in Verbindung stehen.

Wenn der Ring 102 nach oben gezogen wird, werden die Federn 107, 108 bzw. ein elastischer Gummiring zusammengedrückt und üben eine nach unten gerichtete Kraft auf den Vorsprung 105 aus.

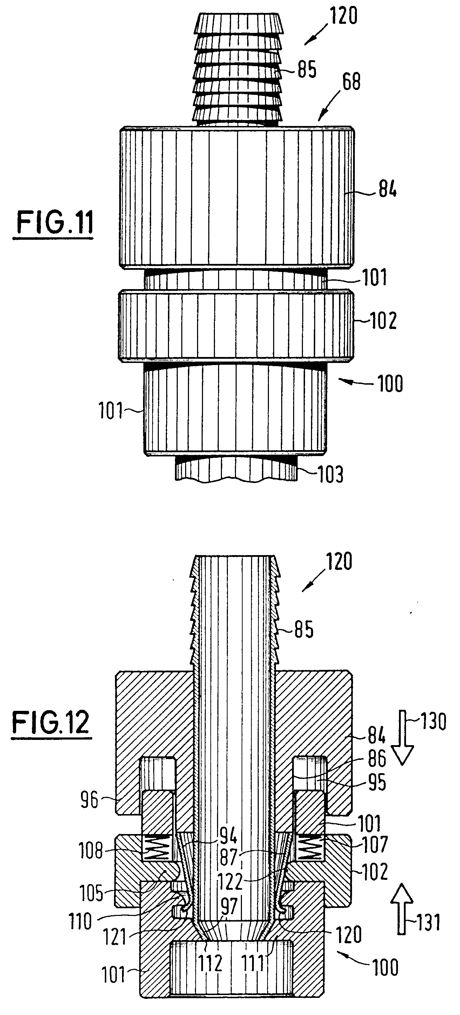

Die Fig. 11 zeigt eine Gesamtverbindung, die aus dem ersten Teil 68 und dem zweiten Teil 100 besteht, wenn beide Teile 68, 100 miteinander verbunden sind. Der Teil 68 kann hierbei mit einem Schlauch verbunden sein, während der Teil 100 in eine Öffnung eines Wassertanks eingepaßt ist. In der Draufsicht erkennt man hierbei die Ringe 84, 102, ein Stück des Zylinders 101 zwischen den Ringen 84, 102 und den Anschlußstutzen 103 unterhalb des Zylinders 101.

Die Verbindung zwischen den beiden Teilen 68, 100 wird in der Weise hergestellt, daß die beiden Teile 68, 100 entsprechend der Richtung der Pfeile 130, 131 aufeinander zubewegt werden, bis sie miteinander verrasten. Die Verrastung erfolgt hierbei in der Weise, daß die Haken 120, 121 die Rastnase 110 hintergreifen. Gelöst werden die beiden Teile 68, 100 dadurch, daß der Ring 102 in Richtung des Pfeils 131 nach oben geschoben wird.

Die in den Fig. 8 und 10 dargestellten Teile 68 und 100 weisen zusätzlich mechanische Verrastungs- und elektrische Koppelelemente auf, die im einzelnen der Übersichtlichkeit wegen nicht dargestellt sind.

Unter mechanischen Verrastungselementen werden dabei solche Elemente verstanden, die auch eine relative Drehung zwischen dem Teil 68 und dem Teil 100 verhindern können. Eine solche Verdrehung soll deshalb verhindert werden, weil zwischen den beiden Teilen 68 und 100 nicht nur eine mechanische, sondern auch eine elektrische Verbindung hergestellt werden soll und es zu Problemen führen könnte, wenn elektrische Verbindungsdrähte verdreht würden. Eine mechanische Verrastung in dem vorbeschriebenen Sinn kann auf einfache Weise dadurch vorgenommen werden, dass der Teil einen Vorsprung aufweist, der in eine entsprechende Vertiefung des Teils 100 eingreift oder umgekehrt. Beispielsweise könnte ein solcher Ort das untere Ende 97 des Teils 68 bzw. der diesem Teil gegenüberliegende Rand des Teils 101 sein. Dieser Bereich könnte auch zur Weiterführung elektrischer Leitungen dienen, die dann beispielsweise in das Rohr 85 eingebettet sein müssten. In vorteilhafter Weise könnte die Vertiefung und der ihr zugeordnete Vorsprung die Funktion von Stecker und Steckdose übernehmen.

Es ist allerdings auch denkbar, eine relative Verdrehung der beiden Teile 68, 100 zueinander zuzulassen und für die Übertragung elektrischer Ströme Schleifkontakte vorzusehen.

Wie die Herstellung der Verbindung der in den Fig. 7 bis 10 gezeigten Teile sowie deren Lösung im einzelnen erfolgt, wird anhand der Fig. 12 beschrieben.

Wenn der Ring 84 mit dem Flüssigkeitsrohr 85 in Richtung des Pfeils 130 nach unten bewegt wird, gelangen die lamellenförmigen und leicht schräg angeordneten Elemente 87, 94 - einen feststehenden Teil 100 vorausgesetzt - in den Bereich des Vorsprungs 110, von dem sie zuerst leicht nach innen gedrückt werden, diesen dann jedoch mit ihren Haken 120, 121 einschnappend untergreifen. Die schräg angeordneten Elemente 87, 94 liegen also ursprünglich noch nicht an dem Rohr 85 an, sondern sind etwas nach außen abgespreizt, was aus den Fig. 8 und 12 nicht zu erkennen ist. Erst durch die schräge Oberfläche der Rastnase 110 werden sie nach innen geführt. Damit ist eine Schnappverbindung hergestellt. Gleichzeitig werden das Flüssigkeitsrohr 85 und der Zylinder 101 wasserdicht miteinander gekoppelt, weil das konisch zulaufende Ende 97 des Flüssigkeitsrohrs 85 auf den Vorsprüngen 111, 112 fest aufliegt.

Der dichte Abschluß der Öffnung 112 wird durch ein elastisches Ende 97 bzw. durch einen auf der Außenseite dieses Endes 97 angeordneten Dichtring gewährleistet. Der Dichtring kann sich selbstverständlich auch auf den Vorsprüngen 111, 112 befinden, während das Ende 97 unelastisch ist.

Soll die hergestellte Schnappverbindung wieder gelöst werden, wird der Ring 102 gegen die Kraft der Federn 107, 108 nach oben verschoben, so daß die Spitze 122 des Vorsprungs 105 gegen die lamellenähnlichen Elemente 87, 94 drückt. Hierdurch werden die Haken 120, 121 von dem ringförmigen Vorsprung 110 gelöst, und der obere Teil 68 kann abgenommen werden. Es versteht sich, daß zwischen der Außenwand des Flüssigkeitsrohrs 85 und den lamellenähnlichen Elementen 87, 94 ein hinreichend großer Abstand bestehen muß, damit die Elemente 87, 94 aus ihrer Schnappverbindung gelöst werden können.

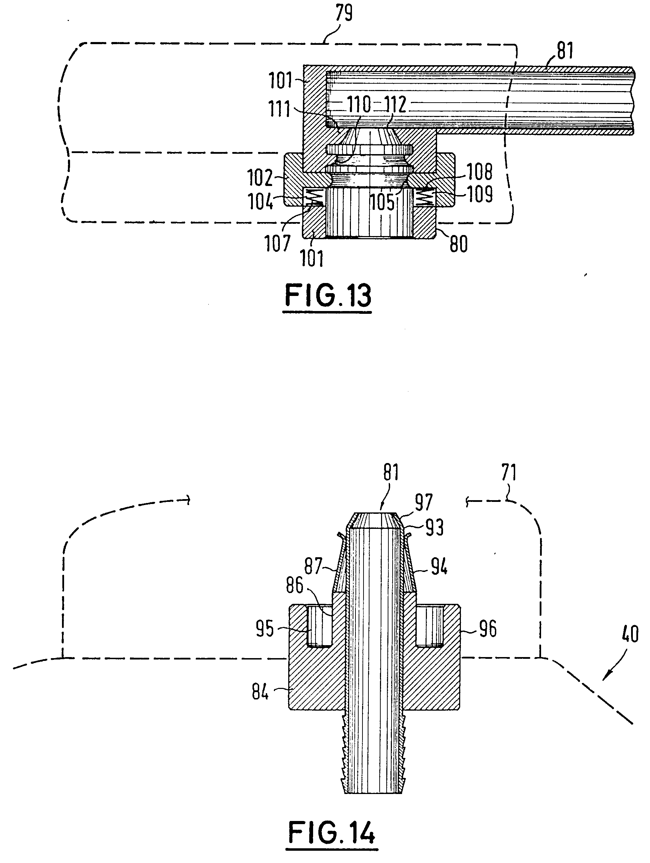

In den Fig. 13 und 14 ist eine Variante der Verbindungselemente gemäß den Fig. 7 bis 12 dargestellt, bei der die Funktionen der Elemente vertauscht sind. Das Element der Fig. 8 befindet sich nun in einer Öffnung des Tanks, während sich das Element der Fig. 10 in einer abgewandelten Form an einem Schlauch befindet.

In der Fig. 13 ist der in der Fig. 6 dargestellte Aufstecker 79 ganz grob und übertrieben groß mit gestrichelten Linien dargestellt, wobei die Stifte 82, 83 weggelassen sind. In ihm befindet sich nun der Teil 100, und zwar gegenüber der Darstellung der Fig. 10 in einer um 180 Grad gedrehten Position. Der Frischwasserschlauch 81 führt beispielsweise in das Innere eines Wohnmobils.

In der Fig. 14 ist der in Fig. 6 dargestellte Anschluß 71 mit gestrichelten Linien angedeutet. Die Löcher für die Aufnahme von Stiften sind hierbei weggelassen. In dem Anschluß 71 und in den Tank 40 hineinragend befindet sich der in der Fig. 8 dargestellte Teil 68, jedoch um 180 Grad gedreht. Dieser Teil 68 bildet - was nicht näher dargestellt ist - mit einer Pumpe und mit Flüssigkeitssensoren das in der Fig. 6 gezeigte Bauteil 70.

Durch Drücken des Aufsteckers 79 auf den Anschluß 71 kann somit eine Schnappverbindung hergestellt werden.

Die in den Fig. 13 und 14 gezeigte Schnappverbindung kann sowohl bei einem Frischwassertank als auch bei einem Abwassertank zur Anwendung kommen. Es werden dann lediglich die Schnappverbindungen gemäß Fig. 13 und Fig. 14 an die Gegebenheiten der Fig. 5 bzw. Fig. 6 angepaßt. Beim Frischwassertank müssen z. B. in den Aufstecker auch noch mehrere elektrische Leitungen integriert werden. Diese elektrischen Leitungen werden über Steckverbindungen mit den elektrischen Anschlüssen der Pumpe in der Weise verbunden, wie es oben bereits beschrieben wurde. Entlüftungsleitungen können ebenfalls noch in den Aufstecker integriert werden.

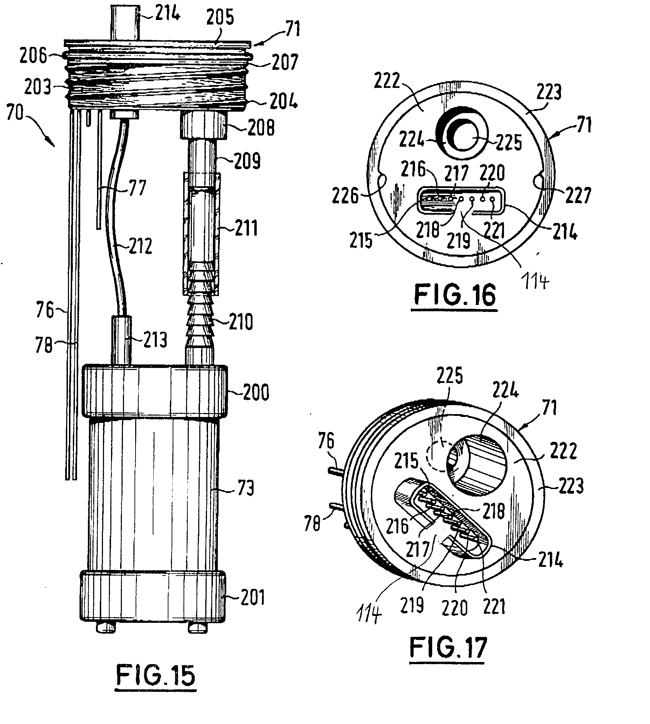

In der Fig. 15 ist das Bauteil 70 von Fig. 6, das für einen Frischwassertank vorgesehen ist, noch einmal näher dargestellt. Man erkennt hierbei die Motorpumpe 73, die einen oberen Flansch 200 und einen unteren Flansch 201 aufweist. Der obere Anschluss 71 weist einen zylindrischen Körper 203 auf, der mit einem Gewinde 204 versehen ist. Mit diesem Gewinde kann das Bauteil 70 mit einem Tank 40 verbunden werden, dessen Öffnung 35, 132, 133 mit einem entsprechenden Innengewinde versehen ist. Unterhalb einer Abschlussplatte 205 ist ein Gummiring 206 vorgesehen, der auf einem Wulst 207 aufliegt. Auf der Oberseite dieser Abschlussplatte befindet sich ein Steckergehäuse 214.

An den zylindrischen Körper 203 ist ein zylindrischer Stutzen 208 angeflanscht, der innen hohl ist und sich nach unten mittels eines engeren Rohrs 209 fortsetzt.

Am oberen Flansch 200 der Motorpumpe 73 ist ein innen hohler Stutzen 210 vorgesehen, der über eine Klarsichttülle 211 mit dem engen Rohr 209 verbunden ist.

Die elektrische Energieversorgung der Motorpumpe 73 erfolgt über ein Kabel 212, das mit seinem einen Ende in einen Stutzen 213 des Flanschs 200 und mit seinem anderen Ende im Körper 203 endet.

In der Fig. 16 ist eine Draufsicht auf den oberen Anschluss 71 gezeigt. Die Motorpumpe 73 und andere Bauteile sind hierbei weggelassen. Man erkennt hierbei, dass das Steckergehäuse 214 insgesamt sieben elektrische Kontaktstifte 215 bis 221 umfasst und an einer Seite offen ist. Diese Öffnung ist mit 114 bezeichnet. Außerdem besitzt es einen inneren Teil 222 und einen diesen umgebenden äußeren Ring 223. Der innere Teil 222 ist mit einer Vertiefung 224 versehen, die an ihrem Boden eine Öffnung 225 aufweist. An zwei Stellen besitzt dieser innere Teil 222 außerdem eine Einkerbung 226, 227.

Eine perspektivische Ansicht auf den in der Fig. 16 gezeigten oberen Anschluss 71 ist in der Fig. 17 gezeigt.

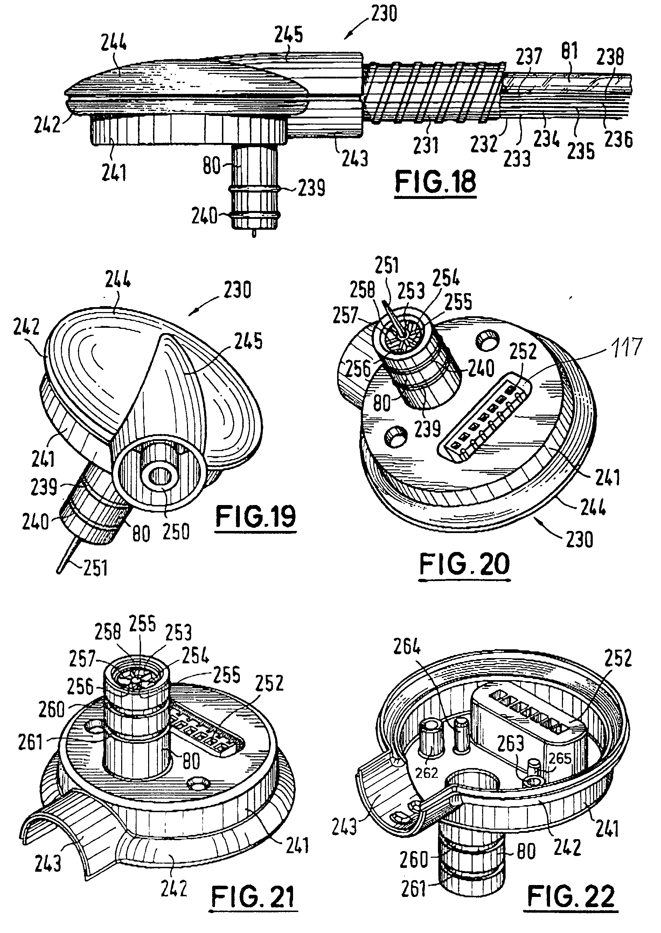

In der Fig. 18 ist ein Aufstecker 230 für einen Frischwassertank dargestellt, der Ähnlichkeiten mit dem in Fig. 6 dargestellten Aufstecker hat und der auf den in den Fig. 15 bis 17 dargestellten Teil 70 aufsteckbar ist. Der Frischwasserschlauch ist deshalb ebenfalls mit 81 bezeichnet, während der Stutzen mit 80 bezeichnet ist. Der Aufstecker 230 ist mit einem elastischen und auf seiner Außenseite geriffelten Schlauch 231 versehen, in dem der Frischwasserschlauch 81 und sieben elektrische Leitungen 232 bis 238 verlaufen.

Der Stutzen 80 ist mit zwei elastischen Ringen 239, 240 versehen und an einem unteren zylindrischen Teil 241 des Aufsteckers 230 angeordnet. Der untere zylindrische Teil 241 geht in einen oberen Teil 242 über und bildet mit diesem zusammen eine untere Schale des Aufsteckers 230. Bestandteil dieser unteren Schale ist auch noch ein halbzylindrischer Teil 243, welcher eine Hälfte des Schlauchs 231 umfasst. Als Gegenstück zur unteren Schale 241 bis 243 ist eine obere Schale vorgesehen, die aus einem gewölbten Deckel 244 und einem halbzylindrischen Teil 245 besteht. Wird der Stutzen 80 in die Öffnung 224 eingeschoben, wird aufgrund der Ringe 239, 240 eine hermetische Abdichtung bewirkt und der Stutzen in der Öffnung 224 gehalten.

In der Fig. 19 sind dieser Deckel 244 und der halbzylindrische Teil 245 noch einmal zu sehen. Man erkennt hierbei zusätzlich einen Stutzen 250, auf den der Frischwasserschlauch 81 gesteckt werden kann, sowie ein Führungsteil 251 aus einem elastischen Material, die aus dem Stutzen 80 herausragt. Dieser Stutzen 80 wird in die Öffnung 224 des Teils 71 (Fig. 16) eingeschoben. Das Führungsteil 251 ist Bestandteil eines Ventils, welches den Durchfluss bzw. die Sperrung des Wasserdurchflusses bewirkt.

Den gleichen Aufstecker 230 wie die Fig. 19 zeigt die Fig. 20, jedoch in einer Ansicht der Unterseite 241. Man erkennt hierbei eine Mehrfachsteckdose 252, in welche die sieben Stifte 215 bis 221 (Fig. 16) eingeführt werden können. Außerdem ragt das Führungsteil 251 aus dem Stutzen 80, wobei sie von sechs sternförmig angeordneten Stegen 253 bis 258 umgeben die das Führungsteil mittig halten.

Eine andere Ansicht des gleichen Teils wie in Fig. 20 ist in Fig. 21 dargestellt. Man erkennt hierbei den halbzylindrischen Teil 243, der den Schlauch 231 umgibt. Außerdem sind die elastischen Ringe 239, 240 entfernt, sodass man zwei Rillen 260, 261 sieht.

Fig. 22 zeigt den gleichen Gegenstand wie Fig. 21, jedoch um 180° gedreht, d. h. der in der Fig. 21 nach oben gerichtete Stutzen 80 zeigt jetzt nach unten. Hierdurch ist der Blick in das Innere der unteren Schale 241, 242, 243 freigegeben. Die Mehrfachsteckdose 252 ist in der Nähe von hohlen Spritzteilen 262 bis 265 angeordnet, von denen z. B. die Verbindungselemente 262, 263 Schrauben aufnehmen können.

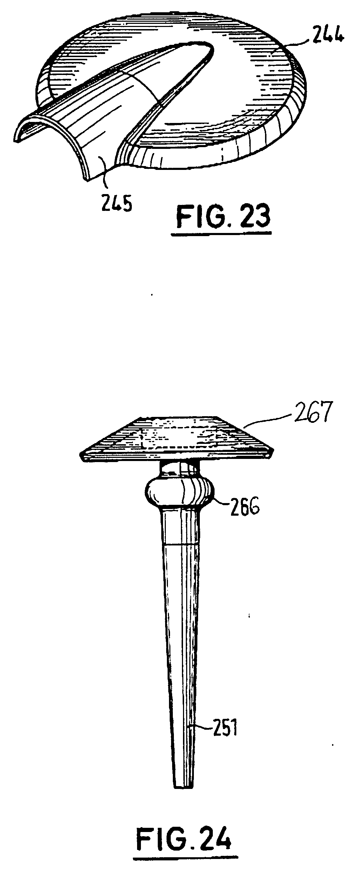

Der gewölbte Deckel 244, mit dem der Teil 241, 242 verbunden wird, ist in der Fig. 23 noch einmal als Einzelteil dargestellt.

Die Fig. 24 zeigt in stark vergrößertem Maßstab ein Ventil mit dem Führungsteil 251, das bereits in den Fig. 19 und 20 zu sehen war. Dieses Führungsteil 251 verbreitert sich nach oben hin zu einem Wulst 266, an den sich ein Ventilschirm 267 anschließt. Die eigentliche Ventilfunktion übernimmt der Ventilschirm 267. Das Führungsteil 251 hat lediglich die Aufgabe, den Ventilschirm in seiner horizontalen Lage zu halten. Drückt Wasser von oben oder unten auf den Ventilschirm, so bewegt sich dieser in vertikaler Richtung und öffnet oder schließt einen Durchfluss.

Wie sich aus den Fig. 5 und 6 ergibt, kann der gleiche Tank 40 einmal als Frischwasserbehälter und einmal als Abwasserbehälter verwendet werden, wobei sich die Koppelelemente nicht nur hinsichtlich der Pumpe unterscheiden, sondern auch hinsichtlich der Größe der Flüssigkeitsdurchlässe 62, 80. Hierdurch kann immer nur ein bestimmtes Paar der Koppelelemente für einen Abwassertank bzw. Frischwassertank verwendet werden, denn das Anschlußteil 61 paßt nicht auf den Anschlußbereich 71, so wie das Anschlußteil 79 nicht auf den Anschlußbereich 47 paßt.

In den Fig. 15 bis 24 ist eine andere Variante dargestellt, bei welcher das Anschlußteil bzw. der Aufstecker 230 für den Abwassertank und den Frischwassertank der gleiche ist und nur der mit dem Tank 40 verbundene Anschlußbereich 71 ausgetauscht wird. Sogar dieser Anschlußbereich 71 kann in seinem oberen Teil mit dem entsprechenden Teil des Abwassertanks identisch sein (vgl. Fig. 16, 17). Die Motorpumpe 73 ist in diesem Fall an das Teil 71 ankoppelbar, das auch für einen Abwassertank Verwendung finden kann.

Von den Kontaktstiften 80 bis 82 des Aufsteckers 230 werden im Falle der Verwendung bei einem Abwassertank nur einige mit einer Funktion belegt.

## Patentansprüche

1. Tank für die Aufnahme von Flüssigkeit, insbesondere Wassertank für Wohnmobile und dergleichen, mit
1.1 einer Öffnung (35, 132, 133) in dem Tank (40),
1.2 einem ersten Koppelelement (47, 70, 100) in der Öffnung des Tanks (40), das
1.2.1 einen Durchlaß (48, 112, 208, 209, 224) für Flüssigkeiten und
1.2.2 einen elektrischen Stecker oder eine elektrische Steckdose (49 bis 57) aufweist;
1.3 einem zweiten Koppelelement (61, 68, 79, 120, 230), das
1.3.1 mit einem Schlauch (60, 231) oder dergleichen verbindbar ist und
1.3.2 einen Durchlaß (80, 62, 134) für Flüssigkeiten sowie
1.3.3 eine elektrische Steckdose oder einen elektrischen Stecker (63, 64, 82, 83) aufweist.

2. Tank nach Anspruch 1, **dadurch gekennzeichnet**, daß der Durchlaß (112, 208, 209, 224) des ersten Koppelelements (47, 70, 100) eine Vertiefung in dem Koppelelement (45, 70, 100) enthält.

3. Tank nach Anspruch 1, **dadurch gekennzeichnet**, daß der Durchlaß des zweiten Koppelelements (68, 61, 79, 120, 230) einen Stutzen (62, 80) enthält.

4. Tank nach den Ansprüchen 2 und 3, **dadurch gekennzeichnet**, daß die Vertiefung (224) im ersten Koppelelement (47, 70, 100) den Stutzen (80) des zweiten Koppelelements (61, 68, 79, 120, 230) aufnimmt.

5. Tank nach Anspruch 1, **dadurch gekennzeichnet**, daß die Steckdose bzw. der Stecker des ersten Koppelelements mit dem Stecker (215 bis 221) bzw. der Steckdose des zweiten Koppelelements verbindbar ist.

6. Tank nach Anspruch 1, **dadurch gekennzeichnet**, daß der Stecker mehrere Kontaktstifte (215 bis 221) aufweist, die aus der Oberfläche des Koppelelements (70) herausragen und von einem Kragen (214) umgeben sind.

7. Tank nach Anspruch 1, **dadurch gekennzeichnet**, daß die Steckdose eine in das zweite Koppelelement eingelassene Leiste (252) ist, die soviele Kontaktöffnungen aufweist, wie der Stecker Kontaktstifte (215 bis 221) hat, und daß die Leiste (252) mit einer Nut (117) für die Aufnahme des Kragens (214) versehen ist.

8. Tank nach Anspruch 3, **dadurch gekennzeichnet**, daß der Stutzen (80) auf seiner Außenseite zweite Dichtungsringe (239, 240) enthält, die in einem Abstand voneinander angeordnet sind.

9. Tank nach Anspruch 3, **dadurch gekennzeichnet**, daß in dem Stutzen (80) ein Ventil (251, 264) vorgesehen ist.

10. Tank nach Anspruch 1, **dadurch gekennzeichnet**, daß das erste Koppelelement (47) für die Verwendung bei einem Abwassertank als zylindrischer Körper (203) mit einem Außengewinde (204) ausgebildet ist und auf seiner Unterseite, die in das Innere des Tanks hineinragt, einen kurzen Stutzen (62) und eine geringe Zahl Kontaktstifte (63, 64) aufweist.

11. Tank nach Anspruch 1, **dadurch gekennzeichnet**, daß das erste Koppelelement (70) für die Verwendung in einem Frischwassertank als zylindrischer Körper (203) mit einem Außengewinde (204) ausgebildet ist und auf seiner Unterseite mit einer elektrischen Pumpe (73) in Verbindung steht.

12. Tank nach Anspruch 11, daß das erste Koppelelement enthält:
a) eine Füllstandssonde mit mehreren Stäben (76 bis 78),
b) ein Schlauchstück (211), das den zylindrischen Körper (203) mit einem Anschlußstutzen (210) der Pumpe (73) verbindet,
c) ein elektrisches Kabel (212) für die Pumpe (73).

13. Tank nach Anspruch 1, **dadurch gekennzeichnet**, daß die Steckverbindung aufweist
13.1 einen ersten Teil (68) mit
13.1.1 einem Ring (84),
13.1.2 mehreren lamellenähnlichen Elementen (87 bis 92, 94), die an dem Ring (84) befestigt und auf einem Kreis angeordnet sind,
13.1.3 einer Flüssigkeitsleitung (85), die durch den Ring (84) führt und an ihrem Ende (97) konisch zuläuft,
13.2 einen zweiten Teil (10) mit
13.2.1 einem Zylinder (101) mit
13.2.1.1 einer Ausnehmung (104) in der Zylinderwand,
13.2.1.2 einer Rastnase (110) auf der Innenseite der Zylinderwand,
13.2.1.3 einem Vorsprung (111) auf der Innenseite der Zylinderwand,
13.2.1.4 einem Federelement (107) in der Ausnehmung (104) in der Zylinderwand,
13.2.2 einem Ring (102), der um den Zylinder (101) gelegt ist, mit
13.2.2.1 einem Vorsprung (105), der durch die Ausnehmung (104) in das Innere des Zylinders (101) ragt.
